# EUROPÄISCHE PATENTSCHRIFT

(11) **EP 0 666 029 B1**
(45) Veröffentlichungstag und Bekanntmachung des Hinweises auf die Patenterteilung: **13.10.1999**
(21) Anmeldenummer: 95101049.5
(22) Anmeldetag: 26.01.1995
(51) Int. Cl.: A22C 11/12, B65G 43/08

(54) **Vorrichtung zum Zählen, Sammeln und Transportieren von Wursthüllen sowie Verfahren**
Device for and method of counting, assembling and transporting sausage skins
Dispositif et procédé pour compter, assembler et transporter des boyaux de saucisse

(30) Priorität: 02.02.1994 DE 4403056
(43) Veröffentlichungstag der Anmeldung: 09.08.1995
(73) Patentinhaber: Kalle Nalo GmbH & Co. KG, 65203 Wiesbaden (DE)
(72) Erfinder: Jahn, Jakob, D-65199 Wiesbaden (DE)
(74) Vertreter: Zounek, Nikolai, Dipl.-Ing.

(56) Entgegenhaltungen:
- EP-A- 0 092 970
- EP-A- 0 498 483
- CH-A- 486 377
- DE-A- 3 021 260
- DE-C- 3 916 109
- FR-A- 2 263 180

## Beschreibung

Die Erfindung bezieht sich auf eine Vorrichtung zum Zählen, Sammeln und Transportieren von Wursthüllen, die von einem Auswerfer an einer Abbindemaschine der Vorrichtung zugeführt werden.

Eine derartige Vorrichtung ist von einer handelsüblichen Kunstdarmabbindemaschine der Firma VEB Kombinat Nagema, Dresden, bekannt. Sie umfaßt im wesentlichen eine Abgabekette, die endlos geschlossen um zwei Walzen umläuft, von denen eine ein Antrieb betätigt. Die Vorrichtung arbeitet in der Weise, daß die aus der Maschine kommende, abgebundene Wursthülle von einem Auswerfer in die Abgabekette geschoben wird. Nach einer fest eingestellten Zahl von fünf Auswurfvorgängen läuft die Abgabekette an, transportiert die angesammelten fünf Wursthüllen eine bestimmte Wegstrecke mit konstanter, nicht veränderbarer Geschwindigkeit, um dann so lange stehenzubleiben, bis sich die nächsten fünf Wursthüllen angesammelt haben.

Die Wursthüllen werden vom Bedienungspersonal von der Abgabekette abgenommen, auf Beschädigungen kontrolliert, falls erforderlich, zu größeren Einheiten gebündelt und zur weiteren Verarbeitung abgegeben.

Nachteilig an der Vorrichtung ist, daß die Arbeitsgeschwindigkeit der Abbindemaschine nicht erhöht werden kann, ohne daß es zu Betriebsstörungen an der Abgabekette kommt, da deren Arbeitsweise nicht beeinflußt werden kann, d.h. daß sie lediglich eine fest eingestellte Anzahl Wursthüllen pro Zeiteinheit transportieren kann.

Der Erfindung liegt die Aufgabe zugrunde, die Vorrichtung der eingangs beschriebenen Art so zu verbessern, daß höhere Arbeitsgeschwindigkeiten der Abbindemaschine möglich sind, daß die Anzahl der zu sammelnden Wursthüllen flexibel einstellbar ist und daß die dann anfallende Stückzahl von der verbesserten Vorrichtung ohne Schwierigkeiten weitertransportiert werden können.

Diese Aufgabe wird erfindungsgemäß in der Weise gelöst, daß die Vorrichtung eine Transporteinheit und eine Steuereinheit aufweist, wobei die Transporteinheit von der Steuereinheit ansteuerbar ist, sobald der Auswerfer eine bestimmte vorwählbare Anzahl von Wursthüllen der Transporteinheit zugeführt hat, und daß die Steuereinheit die Transporteinheit nach dem Transport der Wursthüllen entlang einer bestimmten Wegstrecke abschaltet.

Eine weitere Ausgestaltung der Erfindung wird dadurch erzielt, daß die Transporteinheit Kettenräder, eine Sammelkette mit Mitnehmern, eine Elektromagnetkupplung, einen Antrieb und Sammelschienen, die einen Spalt bilden, durch den die Wursthüllen hindurchlaufen, aufweist, wobei die Sammelkette endlos geschlossen über die Kettenräder umläuft, von denen eines von einem Motor über die Elektromagnetkupplung, eine Antriebskette und Getriebe betätigbar ist.

Die Steuereinheit der Vorrichtung zeichnet sich dadurch aus, daß die Steuereinheit zumindest ein Zählwerk, einen Hebel und Initiatoren umfaßt, daß der Hebel nahe der Eintrittsöffnung der Sammelschienen angeordnet und durch jede Wursthülle betätigbar ist, wodurch er in Kontakt mit einem der Initiatoren gelangt, der einen Zählimpuls an das Zählwerk weiterleitet, das mit diesem Initiator elektrisch verbunden ist, und daß das Zählwerk mit der Elektromagnetkupplung elektrisch verbunden ist, die nach Erreichen der vorgewählten Anzahl von Wursthüllen bzw. Zählimpulsen am Zählwerk die Sammelkette einschaltet.

Da der weitere Initiator ebenfalls mit der Elektromagnetkupplung elektrisch verbunden ist, kann diese ausgeschaltet werden, sobald ein Mitnehmer diesen Initiator passiert, der einen entsprechenden Ausschaltimpuls an die Elektromagnetkupplung liefert.

Das vordere Teil der Sammelschiene ist zweckmäßigerweise nahe dem Auswerfer angeordnet, kann mittels einer in einem Langloch eines Blockes verschiebbaren Schraube in der Höhe verstellt und lagefixiert werden. Im Gegensatz dazu ist das hintere Teil von einem federnden Befestigungselement, ähnlich einem Bügel, beweglich gehalten, wodurch es sich unterschiedlich dicken Wursthüllen anpassen kann und diese vor Beschädigung schützt. Im Rahmen der Aufgabe wird in den Spalt der Sammelschienen eine vorgewählte Anzahl Wursthüllen eingeführt und bevorratet, so daß dem Bedienungspersonal auch bei erhöhten Arbeitsgeschwindigkeit der Abbindemaschine genügend Zeit bleibt, die angesammelten Wurstüllen abzunehmen und weiterzuleiten.

In weiterer Ausgestaltung der Vorrichtung sind zwei oder mehrere Zählwerke vorhanden, die jeweils auf eine unterschiedliche Anzahl von Zählimpulsen einstellbar sind, so daß in den einzelnen Arbeitstakten der Sammelkette entsprechend eine unterschiedliche Anzahl von Wursthüllen angesammelt und weitertransportiert wird. Das Zählwerk enthält üblicherweise einen Mikroprozessor. Transportiert werden die Wursthüllen von den Mitnehmern, die an der umlaufenden Sammelkette angebracht sind, wobei die Sammelkette unterhalb und entlang der unteren Sammelschiene vorbeibewegbar ist.

Durch die Möglichkeit, die Wursthüllen zu zählen und die Transporteinheit gezielt anzusteuern, ist eine große Flexibilität in der Wahl der Arbeitsgeschwindigkeit der Abbindemaschine gegeben.

Die automatische Rückstellung des Zählwerks erleichtert zusätzlich die Arbeit des Bedienungspersonals.

Insgesamt verbessern die beschriebenen Maßnahmen die Wirtschaftlichkeit der Abbindemaschine.

Dem Verfahren liegt die Aufgabe zugrunde, eine frei wählbare Anzahl von Wursthüllen zu zählen und weiterzutransportieren.

Dies wird durch ein Verfahren zum Zählen, Sammeln und Transportieren von Wursthüllen zwischen Sammelschienen einer Vorrichtung in der Weise gelöst, daß die den Sammelschienen zugeführten Wursthüllen einzeln gezählt werden, daß bei Erreichen einer vorgewählten Stückzahl an Wursthüllen diese im Spalt zwischen den Sammelschienen weitertransportiert werden und daß nach Zurücklegen einer vorgegebenen Wegstrecke der Transport der Wursthüllen gestoppt wird.

Die weitere Verfahrensweise ergibt sich aus den Merkmalen des Anspruchs 13. Jede zugeführte Wursthülle löst einen elektrischen Impuls eines Initiators aus, der an ein Zählwerk weitergeleitet wird, das nach Erreichen einer vorgewählten Impulszahl eine Elektromagnetkupplung für die Inbetriebnahme einer Sammelkette einschaltet, und beim Vorbeilaufen eines an der Sammelkette angebrachten Mitnehmers an einem weiteren Initiator wird ein elektrischer Impuls ausgelöst, der die Elektromagnetkupplung ausschaltet.

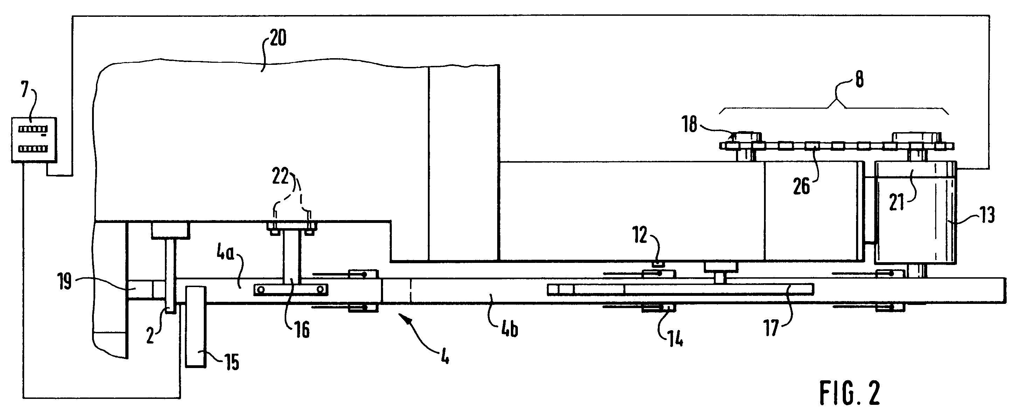

Im folgenden werden zwei Ausführungsbeispiele der Erfindung anhand der Zeichnungen gemäß den Figuren 1, 2 und 3 näher beschrieben. Es zeigen:
- Fig. 1: schematisch eine erste Ausführungsform der Erfindung in Seitenansicht,
- Fig. 2: eine Draufsicht der Ausführungsform nach Figur 1, und
- Fig. 3: eine schematische Seitenansicht einer zweiten Ausführungsform der Erfindung.

Die Ausgangssituation für einen Arbeitstakt einer Sammelkette 10 einer Vorrichtung 1 ist dadurch gegeben, daß einer der Mitnehmer 11, 14, 24, die an der Sammelkette 10 befestigt sind, einen Initiator 12 angefahren hat. Danach läuft ein Arbeitstakt wie folgt ab:

Eine vorkonfektionierte, abgebundene Wursthülle 15 wird aus einer Klammer 19 durch einen Auswerfer 2 in den Spalt zwischen einer oberen Sammelschiene 4 und einer unteren Sammelschiene 3 eingeschoben. Der Auswerfer 2 ist Bestandteil einer nicht näher gezeigten und beschriebenen Abbindemaschine 20 für die Wursthüllen.

Bei dieser Bewegung der Wursthülle wird ein beweglicher Hebel 5 gedrückt, der unterhalb der unteren Sammelschiene 3 angeordnet ist. Der Hebel 5 gibt über einen Initiator 6 an ein Zählwerk 7 einen Impuls weiter, der in der Anzeige des Zählwerks 7 erscheint. Es werden so lange Wursthüllen in den Spalt eingeschoben, bis die am Zählwerk 7 eingestellte Stückzahl erreicht ist. Wenn das der Fall ist, wird eine Elektromagnetkupplung 21 durch einen Impuls des Zählwerks 7 eingeschaltet. Die Elektromagnetkupplung koppelt einen stetig laufenden Motor 13 über eine Antriebskette 26 an ein Getriebe 8 an, das ein mit der Sammelkette 10 im Eingriff befindliches Kettenrad 9 antreibt und somit die an der Sammelkette 10 befestigten Mitnehmer 11, 14, 24 in Bewegung versetzt. Diese transportieren die angesammelten Wursthüllen im Spalt zwischen der oberen und unteren Sammelschiene 4 bzs. 3 so lange, bis der dem Mitnehmer 11 nachgeschaltete Mitnehmer 24 einen weiteren Initiator 12 erreicht hat. Ist das der Fall, wird durch einen Impuls des Initiators 12 die Elektromagnetkupplung 21 ausgeschaltet. Die Sammelkette mit den Mitnehmern 11, 14, 24 bleibt stehen. Ein Arbeitstakt der Vorrichtung 1 ist damit beendet.

An der Abbindemaschine 20 kommt es während des Arbeitsablaufes zu keinem durch die Arbeitsweise der Vorrichtung 1 bedingten Stillstand, da das Zählwerk 7 mit automatischer Rückstellung arbeitet, d.h. nach Erreichen der eingestellten Stückzahl wird das Zählwerk wieder auf Null zurückgestellt. Die vorgewählte Anzahl von Zählimpulsen bleibt dabei im Zählwerk erhalten, so daß ein neuer Zählvorgang ohne Stillstand bzw. Unterbrechung eingeleitet werden kann.

Damit während des Transports der Wursthüllen im Spalt zwischen oberer und unterer Sammelschiene 3 keine Wursthüllen beschädigt werden, ist die obere Sammelschiene 4 zweiteilig ausgeführt.

Der erste Teil 4a ist nahe dem Auswerfer 2 angeordnet und wird durch ein Halteelement 16 gehalten. Je nach Bedarf kann der Auswerfer 2 über Einstellschrauben 22, die in Langlöchern 25 eines Blockes 23 des Halteelements 16 beweglich sind, in unterschiedlichen Höhen fixiert werden.

Der zweite Teil 4b schließt sich dem ersten direkt an und ist durch ein federndes Befestigungselement 17 beweglich gehalten und kann sich deshalb an unterschiedlich dicke Wursthüllen 15 anpassen und diese vor Beschädigung schützen.

Die untere Sammelschiene 3 ist einteilig ausgeführt und lagefest angebracht.

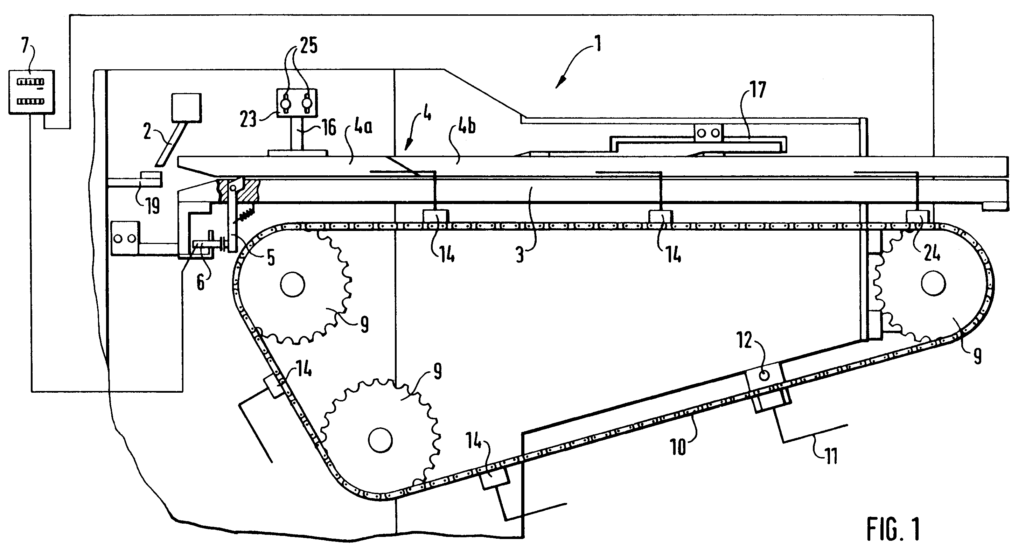

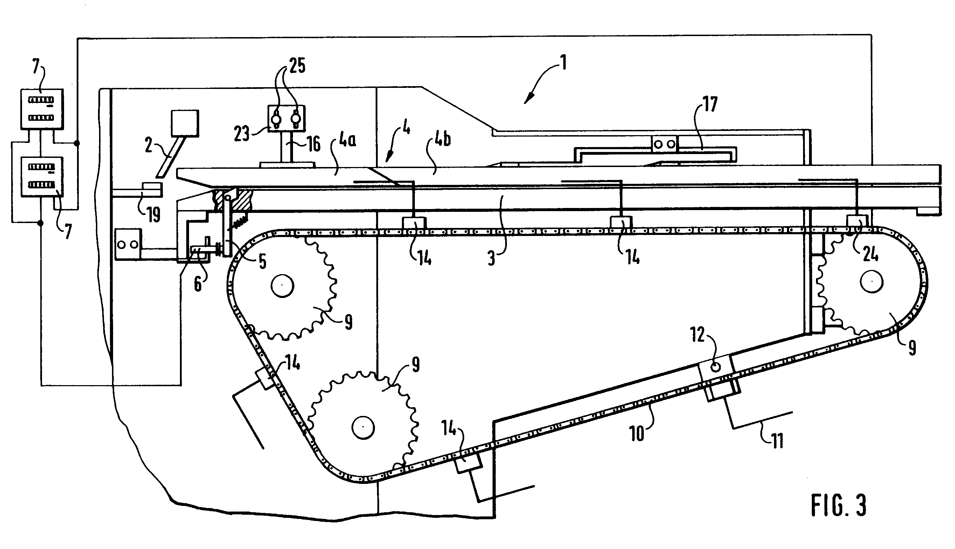

Figur 3 zeigt eine schematische Seitenansicht einer weiteren Ausführungsform der Erfindung, die sich von der in Figur 1 dargestellten Ausführung darin unterscheidet, daß zwei Zählwerke 7 vorhanden sind. Beide sind mit dem Initiator 6 und der Elektromagnetkupplung 21 elektrisch verbunden. Zusätzlich besteht noch eine elektrische Verbindung zwischen den beiden Zählwerken 7, über die sich die beiden Zählwerke gegenseitig ein- bzw. ausschalten.

Diese Ausführung ermöglicht es, in zwei aufeinanderfolgenden Arbeitstakten unterschiedliche Mengen Wursthüllen anzusammeln. Dies geschieht dadurch, daß das laufende Zählwerk nach Erreichen der eingestellten Zahl das andere, stillstehende Zählwerk über einen elektrischen Impuls einschaltet und sich selbst ausschaltet, nachdem die automatische Rückstellung erfolgt ist.

Analog können mit zusätzlichen Zählwerken 7 weitere unterschiedliche Mengen Wursthüllen 15 den Arbeitstakten der Sammelkette 10 zugeordnet werden.

Das einzelne Zählwerk 7 enthält beispielsweise einen programmierbaren Mikroprozessor, der die vorgewählte Anzahl von Zählimpulsen speichert und diese Anzahl mit der Zahl der gezählten Impulse vergleicht und einen Einschaltimpuls an die Elektromagnetkupplung abgibt, sobald die Anzahl der gezählten Impulse mit der vorgewählten Anzahl der Zählimpulse übereinstimmt.

## Patentansprüche

1. Vorrichtung zum Zählen, Sammeln und Transportieren von Wursthüllen, die von einem Auswerfer an einer Abbindemaschine der Vorrichtung zugeführt werden, dadurch gekennzeichnet, daß die Vorrichtung (1) eine Transporteinheit und eine Steuereinheit aufweist, wobei die Transporteinheit von der Steuereinheit ansteuerbar ist, sobald der Auswerfer (2) eine bestimmte, vorwählbare Anzahl von Wursthüllen (15) der Transporteinheit zugeführt hat, und daß die Steuereinheit die Transporteinheit nach dem Transport der Wursthüllen entlang einer bestimmten Wegstrecke abschaltet.

2. Vorrichtung nach Anspruch 1, dadurch gekennzeichnet, daß die Transporteinheit Kettenräder (9), eine Sammelkette (10) mit Mitnehmern (11, 14, 24), eine Elektromagnetkupplung (21), einen Antrieb (8) und Sammelschienen (3, 4), die einen Spalt bilden, durch den die Wursthüllen hindurchlaufen, aufweist, wobei die Sammelkette (10) endlos geschlossen über die Kettenräder (9) umläuft, von denen eines von einem Motor (13) über die Elektromagnetkupplung (21), eine Antriebskette (26) und Getriebe (18) betätigbar ist.

3. Vorrichtung nach Anspruch 2, dadurch gekennzeichnet, daß die Mitnehmer (11, 14, 24), die an der umlaufenden Sammelkette (10) angebracht sind, die zwischen den Sammelschienen (3, 4) befindlichen Wursthüllen 15 weiterbefördern, und daß die Sammelkette (10) unterhalb und entlang der unteren Sammelschiene (3) vorbeibewegbar ist.

4. Vorrichtung nach Anspruch 1, dadurch gekennzeichnet, daß die Steuereinheit zumindest ein Zählwerk (7), einen Hebel (5) und Initiatoren (6, 12) umfaßt, daß der Hebel (5) nahe der Eintrittsöffnung der Sammelschienen (3, 4) angeordnet und durch jede Wursthülle betätigbar ist, wodurch er in Kontakt mit einem (6) der Initiatoren (6, 12) gelangt, der einen Zählimpuls an das Zählwerk (7) weiterleitet, das mit diesem Initiator (6) elektrisch verbunden ist, und daß das Zählwerk mit der Elektromagnetkupplung (21) elektrisch verbunden ist, die nach Erreichen der vorgewählten Anzahl von Wursthüllen bzw. Zählimpulsen am Zählwerk (7) die Sammelkette (10) einschaltet.

5. Vorrichtung nach Anspruch 4, dadurch gekennzeichnet, daß der weitere Initiator (12) ebenfalls mit der Elektromagnetkupplung (21) elektrisch verbunden ist und diese ausschaltet, sobald ein Mitnehmer (11, 14, 24) diesen Initiator passiert.

6. Vorrichtung nach Anspruch 4, dadurch gekennzeichnet, daß zwei oder mehrere Zählwerke vorhanden sind, die jeweils auf eine unterschiedliche Anzahl von Zählimpulsen einstellbar sind und die jeweils unterschiedlichen Arbeitstakten der Sammelkette zugeordnet sind, so daß entsprechend unterschiedliche Mengen von Wursthüllen ansammelbar und transportierbar sind.

7. Vorrichtung nach Anspruch 4, dadurch gekennzeichnet, daß das Zählwerk einen Mikroprozessor enthält.

8. Vorrichtung nach Anspruch 6, dadurch gekennzeichnet, daß die Zählwerke (7) eine automatische Rückstellung besitzen, die nach Erreichen der eingestellten Stückzahl die Zählwerke in die Nullstellung zurückstellen, und daß die Zählwerke durch elektrische Impulse ein- bzw. ausgeschaltet werden können.

9. Vorrichtung nach Anspruch 2, dadurch gekennzeichnet, daß die untere Sammelschiene (3) einstückig ausgebildet und lagefest angeordnet ist und daß die obere Sammelschiene (4) aus zwei Teilen (4a, 4b) besteht, von denen das vordere Teil (4a) höhenverstellbar ist und das hintere Teil (4b) federnd angebracht ist.

10. Vorrichtung nach Anspruch 9, dadurch gekennzeichnet, daß das vordere Teil (4a), das nahe dem Auswerfer (2) angeordnet ist, mittels in Langlöchern (25) eines Blocks (23) verschiebbaren Einstellschrauben (22) höhenverstellbar ist.

11. Vorrichtung nach Anspruch 9, dadurch gekennzeichnet, daß das hintere Teil (4b) von einem federnden Befestigungselement (17) gehalten ist.

12. Verfahren zum Zählen, Sammeln und Transportieren von Wursthüllen zwischen Sammelschienen einer Vorrichtung, dadurch gekennzeichnet, daß die den Sammelschienen zugeführten Wursthüllen einzeln gezählt werden, daß bei Erreichen einer vorgewählten Stückzahl an Wursthüllen diese im Spalt zwischen den Sammelschienen weitertransportiert werden, und daß nach Zurücklegen einer vorgegebenen Wegstrecke der Transport der Wursthüllen gestoppt wird.

13. Verfahren nach Anspruch 12, dadurch gekennzeichnet, daß jede zugeführte Wursthülle einen elektrischen Impulses in einem Initiator auslöst, der an ein Zählwerk weitergeleitet wird, das nach Erreichen einer vorgewählten Impulszahl eine Elektromagnetkupplung für die Inbetriebnahme einer Sammelkette einschaltet, und daß beim Vorbeilaufen eines an der Sammelkette angebrachten Mitnehmers an einem weiteren Initiator ein elektrischer Impuls ausgelöst wird, der die Elektromagnetkupplung ausschaltet.

## Claims

1. All apparatus for the counting, collection and transportation of sausage casings which are supplied to the apparatus by an ejector on a tying-off machine, wherein the apparatus (1) has a transport unit and a control unit, the transport unit being activatable by the control unit as soon as the ejector (2) has supplied a specified preselectable number of sausage casings (15) to the transport unit, and wherein the control unit switches off the transport unit after the transport of the sausage casings over a specific distance.

2. The apparatus as claimed in claim 1, wherein the transport unit has chain wheels (9), a collecting chain (10) with drivers (11, 14, 24), an electromagnetic coupling (21), a drive (8) and collecting rails (3, 4) forming a gap, through which the sausage casings run, the collecting chain (10) rotating in an endlessly closed manner via the chain wheels (9), one of which can be actuated by a motor (13) via the electromagnetic coupling (21), a drive chain (26) and gear (18).

3. The apparatus as claimed in claim 2, wherein the drivers (11, 14, 24) mounted on the rotating collecting chain (10) convey further the sausage casings (15) located between the collecting rails (3, 4), and wherein the collecting chain (10) can be moved past below and along the lower collecting rail (3).

4. The apparatus as claimed in claim 1, wherein the control unit comprises at least one counter (7), a lever (5) and initiators (6, 12), wherein the lever (5) is arranged near the entry orifice of the collecting rails (3, 4) and can be actuated by each sausage casing, with the result that said lever (5) comes into contact with one (6) of the initiators (6, 12) which transmits a counting pulse to the counter (7) connected electrically to this initiator (6), and wherein the counter is connected electrically to the electromagnetic coupling (21) which switches on the collecting chain (10) after the preselected number of sausage casings or counting pulses at the counter (7) has been reached.

5. The apparatus as claimed in claim 4, wherein the further initiator (12) is likewise connected electrically to the electromagnetic coupling (21) and cuts the latter out as soon as a driver (11, 14, 24) passes this initiator.

6. The apparatus as claimed in claim 4, wherein there are two or more counters which can each be set at a different number of counting pulses and which are each assigned to different work cycles of the collecting chain, so that different quantities of sausage casings can be correspondingly accumulated and transported.

7. The apparatus as claimed in claim 4, wherein the counter contains a microprocessor.

8. The apparatus as claimed in claim 6, wherein the counters (7) possess automatic resetting which resets the counters to the zero position after the set number of articles has been reached, and wherein the counters can be switched on and off by means of electrical pulses.

9. The apparatus as claimed in claim 2, wherein the lower collecting rail (3) is designed in one piece and is arranged in a fixed position, and wherein the upper collecting rail (4) consists of two parts (4a, 4b), of which the front part (4a) is adjustable in height and the rear part (4b) is mounted resiliently.

10. The apparatus as claimed in claim 9, wherein the front part (4a) arranged near the ejector (2) is adjustable in height by means of adjusting screws (22) displaceable in long holes (25) of a block (23).

11. The apparatus as claimed in claim 9, wherein the rear part (4b) is held by a resilient fastening element (17).

12. A process for the counting, collection and transportation of sausage casings between collecting rails of an apparatus, wherein the sausage casings supplied to the collecting rails are counted individually, wherein, when a preselected number of sausage casings has been reached, these are transported further in the gap between the collecting rails, and wherein the transport of the sausage casings is stopped after a predetermined distance has been covered.

13. The process as claimed in claim 12, wherein each sausage casing supplied triggers an electrical pulse in an initiator which is transmitted to a counter which, after a preselected number of pulses has been reached, switches on an electromagnetic coupling for operating a collecting chain, and wherein, when a driver mounted on the collecting chain runs past a further initiator, an electrical pulse cutting out the electromagnetic coupling is triggered.

## Revendications

1. Dispositif pour compter, collecter et transporter des boyaux de saucisses, qui sont envoyés par un éjecteur sur une machine de liage du dispositif, caractérisé en ce que le dispositif (1) comporte une unité de transport et une unité de commande, l'unité de transport pouvant être commandée par l'unité de commande dès que l'éjecteur (2) a envoyé à l'unité de transport un nombre déterminé, pouvant être présélectionné, de boyaux de saucisses (15) et que l'unité de commande débranche l'unité de transport après le transport des boyaux de saucisses sur une distance de déplacement déterminée.

2. Dispositif selon la revendication 1, caractérisé en ce que l'unité de transport comporte des roues à chaîne (9), une chaîne de collecte (10) comportant des organes d'entraînement (11, 14, 24), un accouplement électromagnétique (21), un dispositif d'entraînement (8) et des rails de collecte (3, 4), qui forment une fente à travers laquelle se déplacent les boyaux de saucisses, la chaîne de collecte (10) circulant en boucle sans fin sur les roues à chaîne (9), dont l'une peut être actionnée par un moteur (13) par l'intermédiaire de l'accouplement électromagnétique (21), d'une chaîne d'entraînement (26) et d'une transmission (18).

3. Dispositif selon la revendication 2, caractérisé en ce que les organes d'entraînement (11, 14, 24), qui sont montés sur la chaîne de collecte (10) circulante, réexpédient les boyaux de saucisses (15) situés entre les rails de collecte (3, 4) et que la chaîne de collecte (10) peut se déplacer au-dessous et le long du rail inférieur de collecte (3).

4. Dispositif selon la revendication 1, caractérisé en ce que l'unité de commande comprend au moins une unité de comptage (7), un levier (5) et des organes de déclenchement (6, 12), que le levier (5) est disposé à proximité de l'ouverture d'entrée des rails de collecte (3, 4) et peut être actionné par chaque boyau de saucisse, ce qui a pour effet que le levier vient en contact avec l'un (6) des organes de déclenchement (6, 12), qui transmet une impulsion de comptage à l'unité de comptage (7) qui est reliée électriquement à cet organe de déclenchement et que l'unité de comptage est reliée électriquement à l'accouplement électromagnétique (21) qui branche la chaîne de collecte (10) une fois que le nombre présélectionné de boyaux de saucisses ou d'impulsions de comptage au niveau de l'unité de comptage (7) a été atteint.

5. Dispositif selon la revendication 4, caractérisé en ce que l'autre organe de déclenchement (12) est également relié électriquement à l'accouplement électromagnétique (21) et débranche ce dernier dès qu'un organe d'entraînement (11, 14, 24) passe devant cet organe de déclenchement.

6. Dispositif selon la revendication 4, caractérisé en ce qu'il est prévu deux ou plusieurs unités de comptage, qui peuvent être réglées respectivement sur des nombres différents d'impulsions de comptage et qui sont associées à des cycles de travail respectifs différents de la chaîne de collecte, de sorte que des quantités différentes correspondantes de boyaux de saucisses peuvent être collectées et transportées.

7. Dispositif selon la revendication 4, caractérisé en ce que l'unité de comptage contient un microprocesseur.

8. Dispositif selon la revendication 6, caractérisé en ce que les unités de comptage (7) possèdent un système de remise à zéro automatique qui, une fois atteint le nombre réglé de pièces, ramène les unités de comptage dans la position zéro et en ce que les unités de comptage peuvent être activées ou désactivées au moyen d'impulsions électriques.

9. Dispositif selon la revendication 2, caractérisé en ce que le rail inférieur de collecte (3) est réalisé d'un seul tenant et est monté fixe et que le rail supérieur de collecte (4) est formé de deux parties (4a, 4b), parmi lesquelles la partie avant (4a) est réglable en hauteur et la partie arrière (4b) est montée élastiquement.

10. Dispositif selon la revendication 9, caractérisé en ce que la partie avant (4a), qui est disposée à proximité du dispositif d'éjection (2), est réglable en hauteur au moyen de vis de réglage (22) qui sont déplaçables dans des trous allongés (25) d'un bloc (23).

11. Dispositif selon la revendication 9, caractérisé en ce que la partie arrière (4b) est retenue par un élément de fixation élastique (17).

12. Procédé pour compter, collecter et transporter des boyaux de saucisses entre des rails de collecte d'un dispositif, caractérisé en ce que les boyaux de saucisses envoyés aux rails de collecte sont comptés individuellement, que lorsqu'un nombre présélectionné de boyaux de saucisses est atteint, ces boyaux sont réexpédiés dans la fente entre les rails de collecte et qu'après le franchissement d'une distance de déplacement prédéterminée, le transport des boyaux de saucisses est arrêté.

13. Procédé selon la revendication 12, caractérisé en ce que chaque boyau de saucisse amené déclenche, dans un organe de déclenchement, une impulsion électrique qui est transmise à une unité de comptage qui, une fois atteint un nombre présélectionné d'impulsions, branche un accouplement électromagnétique pour la mise en service d'une chaîne de collecte, et que lors du passage d'un organe d'entraînement monté sur la chaîne de collecte, devant un autre organe de déclenchement, une impulsion électrique est déclenchée, qui débranche l'accouplement électromagnétique.
